# EUROPEAN PATENT APPLICATION

(11) **EP 4 843 696 A1**
(43) Date of publication of application: **25.11.2026**
(21) Application number: 25177342.0
(22) Date of filing: 19.05.2025
(51) Int. Cl.: B23K 26/12, B23K 26/70

(54) **LASER PROCESSING HEAD, HOLDER FOR A PROTECTIVE GLASS, PROTECTIVE GLASS, METHOD FOR LASER PROCESSING A WORKPIECE**

(71) Applicant: Bystronic Laser AG, 3362 Niederönz (CH)
(72) Inventor: HAU, Christian, 1566 St. Aubin (CH); KALLEN, Benjamin, 3362 Niederoenz (CH); BOVEY, Marcel, 3380 Wangen an der Aare (CH); KOHLER, Lukas, 4573 Lohn-Ammannsegg (CH)
(74) Representative: Patentanwälte Geyer, Fehners & Partner mbB

(57) **Abstract**

A laser processing head 10 for a laser processing machine is provided, including a laser light entry point 12 and a laser light exit point 14; a laser guiding optics 16 in between the laser light entry point and the laser light exit point; and a protective glass 18 being transmissive at least to laser light 20 and being arranged at the end of the laser guiding optics towards the laser light exit point. The laser processing head has an electrical heating system 22 to heat the protective glass. A holder for a protective glass and a protective glass are also provided.

## Description

The present invention is directed to a laser processing head, a holder for a protective glass, a protective glass, and a method for laser processing a workpiece.

During high power laser processing, e.g. laser cutting of metal sheets, a plasma, nanoparticles or vapors are generated and may condensate, adsorb or sublimate on a protective glass mounted in a laser processing head of a laser processing machine. Moreover, sulfur, ammonia or other gases and aerosols from the environment can react or sublimate on the protective glass mounted in a laser processing head of a laser processing machine. Due to such particles, gases, vapors or aerosols, a crystallized or amorphous film can be generated in particular on the part of the protection glass, which is directed to the processing zone of a workpiece. Such film generation on the surface of the protective glass by reaction, adsorption or sublimation of particles or aerosols from the environment can happen particularly when the processing head is not used and the processing machine is switched off, due to a temperature drop and e.g. a phase transition from liquid to solid. This can lead to a false positive trigger of a sensor threshold for cleanliness of the protective glass. As a result, the time intervals for exchanging the protective glass are shorter and maintenance cost of the laser processing head are increased.

The aim to be achieved is to provide a laser processing head, a holder for a protective glass, a protective glass, and a method for laser processing a workpiece, which allow increased time intervals for exchange of the protective glass and a reduction of maintenance cost of the laser processing head.

This aim is achieved by a laser processing head according to claim 1, a holder for a protective glass according to claim 10, a protective glass according to claim 11, and a method for laser processing a workpiece according to claim 13.

An embodiment is directed to a laser processing head for a laser processing machine, including a laser light entry point and a laser light exit point; a laser guiding optics in between the laser light entry point and the laser light exit point; and a protective glass being transmissive at least to laser light and being arranged at the end of the laser guiding optics towards the laser light exit point. The laser processing head has an electrical heating system to heat the protective glass.

By heating the protective glass using the electrical heating system, adsorption, condensation or sublimation of undesired substances, such as particles, gases, vapors or aerosols within or from outside of the processing head, on the surface of the protective glass can be avoided or reduced. Hence, the generation of an undesired crystallized or amorphous film on the protection glass can be prevented. This can be achieved particularly when the processing head is not used and/or the processing machine is switched off. Thereby, a false positive trigger of a sensor threshold for cleanliness of the protective glass can be avoided. As a result, the time intervals for exchanging the protective glass are longer and maintenance cost of the laser processing head are reduced.

Undesired adsorbed, condensed or sublimated substances deposited on the protective glass can be one or more products from fluid or solid substances within the laser processing head, or products from fluid or solid substances entering the laser processing head through the laser light exit point, like plasma particles, metal particles, water, sulphur, ammonia, ammonium sulphide, and any combination thereof. Undesired adsorbed, condensed or sublimated substances can also be called adsorbates, condensates or sublimates. The plasma particles can have sizes e.g. in a range from 1 nanometer to 1 µm.

The electrical heating system, in the following also referred to as heating system, can be configured to heat the protective glass to at least one desorption temperature of adsorbates on the protective glass and/or to at least one resublimation temperature of sublimates on the protective glass. The heating system can be configured to heat the protective glass to a minimum, maximum or an intermediate temperature of the desorption temperatures of the adsorbates and/or of the resublimation temperatures of the sublimates.

The protective glass can include or can be formed of at least one laser light transmissive material. For instance, the protective glass can include or can be formed of sapphire, fused silica, CaF₂ and any combination thereof. The protective glass can be transmissive at least to laser light e.g. in the wavelength range of 800 to 1200 nm. The protective glass can also be and preferabl is transmissive to other light than laser light, for instance to light in the visible and/or infrared wavelength range. The protective glass can have two or more glass layers each including at least one laser light transmissive material, e.g. the protective glass can be a sandwich type protective glass.

The heating system can be configured to automatically set a certain temperature, e.g. 50°C, to prevent condensation, adsorption, sublimation or reaction of particles, gases, vapors or aerosols, such as moisture (H2O) tarnish, on the protective glass. If condensation, adsorption, sublimation or reaction has already occurred, the heating system can prevent a reaction and/or a phase transition of undesired substances on the surface of the protective glass, e.g. from liquid to solid, or even reverse the reaction and/or the phase transition, such as from solid back to liquid or gas. For instance, ammonium sulfide deposited on the protective glass can be transformed back into gas.

The heating system can include and/or can be controlled by a control system configured to intelligently recognize processing breaks, for example a control system of the machine control and/or of the processing head. This information can initiate the heating of the protective glass, whereby a further condensation, adsorption or sublimation of undesired substances on the protective glass and e.g. a phase transition from liquid to solid can be prevented. The heating system can be configured to set the time and temperature necessary to avoid the condensation, adsorption or sublimation and/or the phase transition. The heating system can include an acceleration sensor positioned in the processing head, which is configured to detect processing breaks.

Alternatively, the electrical heating system can be configured to permanently maintain a temperature of the protective glass or of a part of the protective glass, the temperature preventing the condensation, adsorption or sublimation of particles, gases, vapors or aerosols on the protective glass. Thus, the heating system can be used without detection of cutting breaks.

The electrical heating system can be at least partially provided within the processing head, to heat the protective glass directly or indirectly. The electrical heating system can be at least partially provided in the laser guiding optics, on a holder of the protective glass and/or on the protective glass. In some examples, the heating system can be configured to heat the surrounding of the protective glass, e.g. a holder of the protective glass. The holder of the protective glass can be or can include a drawer for exchanging the protective glass.

The electrical heating system can be configured to heat the protective glass to at least 30° C, preferably to 30° to 80° C, more preferably to 40° to 70° C.

The electrical heating system can be selected from an electrical resistance heating system, an electrical inductive heating system, and an electrical powered Peltier system.

The electrical heating system can include at least one heating element, preferably an electrical resistance heating element, for heating the protective glass. In other embodiments, the heating system can include an inductive heating element, a Peltier element, a heating element producing an electromagnetic field, a heating element based on gas compression, a heating element based on chemical reaction, a heating element based on mechanical energy, a heating element including a heating coating on the protective glass or any combination thereof. The electromagnetic field can be a photothermal field and/or an infrared field.

In the processing head, the protective glass can be positioned at the end of the laser guiding optics. The protective glass can e.g. be positioned between the last optical element of the laser guiding optics and the laser light exit point. In other examples, the protective glass or a second protective glass can be provided at the beginning of the laser guiding optics.

The laser processing head can include a holder for the protective glass at the end of the laser guiding optics and/or a recess for inserting the holder for the protective glass at the end of the laser guiding optics.

In one example, the laser processing head can include a cooling element between the protective glass and the laser light exit point. This example allows to cool the cooling element such that undesired substances do not adsorb, condense or sublimate on the protective glass, but instead on the cooling element. The cooling element can act as a condenser for undesired substances.

The electrical heating system can include at least one electrical resistance heating element for heating the protective glass.

The heating system can include at least one temperature sensor for detecting the temperature of the protective glass. In other embodiments, the heating system can include a bimetal switch for detecting the temperature of the protective glass and for switching the heating element. Instead of using a control system, a control device and/or a sensor, the bimetal switch can be used for powering the heating element. For instance, the bimetal switch can be connected to the heating element and open a circuit to the heating element at a specific temperature to switch the heating element off. After cooling down to a certain temperature, due to hysteresis of its material, the bimetal switch can switch the heating element on again.

In some embodiments, the heating element can be integrated into or attached to or can be configured to be attached to the protective glass. In this respect, the term "attached to" can be understood as attached to by material bonding. Bonding material in this respect can be the material of the protective glass itself. The heating element can for instance be held in between layers of a sandwich type protective glass. The term "integrated into" can be understood as incorporated into the protective glass. The heating element can for instance be incorporated into the glass during glass forming of the protective glass, the heating part of the heating element positioned in the volume of the protective glass, the electrical contacts of the heating element positioned on the surface of the protective glass.

In another embodiment of the laser processing head, the heating element can be arranged separate from the protective glass and/or at the holder for the protective glass. At the holder means in that respect that it can be anywhere in or on the holder or attached to the holder.

The laser processing head can include a control system configured for controlling the electrical heating system to heat the protective glass exclusively during processing breaks and/or permanently. The electrical heating system can be configured to be controllably connected to the control system, e.g. wired or wire-less. The bimetal switch can be configured for heating the protective glass exclusively during processing breaks or permanently. The control system can be connected to the electrical heating system in a data conducting manner.

The laser processing head can be used e.g. for laser cutting metal sheets.

One embodiment is directed to a holder for a protective glass to be inserted in the laser processing head according to any of the preceding embodiments, modifications and examples. The holder has a frame structure to mount and/or to support the protective glass and includes at least one element of the electrical heating system selected from the heating element, the temperature sensor, and a bimetal switch.

A further embodiment is directed to a protective glass for a laser processing head of a laser processing machine, in particular for a laser processing head according to any of the preceding embodiments, modifications and examples. The protective glass has a heating element, preferably an electrical resistance heating element, of an electrical heating system, integrated into the protective glass or attached to one of its surfaces. In this respect, the term "attached to" can be understood as attached to by material bonding. Bonding material in this respect can be the material of the protective glass itself. The heating element can for instance be held in between layers of a sandwich type protective glass. The term "integrated into" can be understood as incorporated into the protective glass. The heating element can for instance be incorporated into the glass during glass forming of the protective glass, the heating part of the heating element positioned in the volume of the protective glass, the electrical contacts of the heating element positioned on the surface of the protective glass.

The protective glass can have a circumferential notch that carries the heating element, in particular the electrical resistance heating element. This allows a direct contact of the electrical (resistance) heating element to the protective glass, and, thereby, an effective and efficient heating of the protective glass. Moreover, this configuration of the protective glass allows a space saving arrangement within the laser guiding optics of the processing head. The heating element can for instance be clamped in the circumferential notch.

The protective glass can be transmissive at least to laser light. The protective glass can include or can be formed of at least one laser light transmissive material. For instance, the protective glass can include or can be formed of sapphire, fused silica, CaF₂ and any combination thereof. The protective glass can be transmissive at least to laser light in the wavelength range of 800 to 1200 nm. The protective glass can be transmissive in addition to laser light to other light than laser light, for instance to light in the visible and/or infrared wavelength range. The protective glass can have two or more glass layers each including at least one laser light transmissive material, e.g. the protective glass can be a sandwich type protective glass. The protective glass protects the optical chamber from contamination.

Another embodiment is directed to a method for laser processing a workpiece with a laser processing head according to any of the preceding embodiments, modifications and examples. The protective glass is heated by an electrical heating system to at least 30° C, preferably to 30° to 80° C, more preferably to 40° to 70° C. In the method, a laser beam can be generated by a laser device provided at or connected to the laser light entry point. The laser beam can be guided to the laser light exit point.

In the method, the protective glass can be heated to a minimum, a maximum or an intermediate temperature of the desorption temperatures of the adsorbates, of the evaporation temperatures of the condensates and/or of the resublimation temperatures of the sublimates.

In some examples of the method, the protective glass can be heated exclusively during processing breaks or permanently.

A further embodiment is directed to a computer program product including one or more program modules which have the effect that the laser processing head according to any of the preceding embodiments, modifications and examples carries out the steps of the method according to any of the preceding embodiments, modifications and examples, in particular when the program modules are loaded into a memory unit of the control system or of the laser processing head.

The embodiments, modifications and examples of the holder and/or of the protective glass can be used in the embodiments, modifications and examples of the laser processing head. With the embodiments, modifications and examples of the laser processing head, the same advantages and functions can be achieved as with the embodiments, modifications and examples of the holder and/or the protective glass, in particular with identical and/or analogous features.

In the following, the invention will be explained in more detail on the basis of exemplary embodiments with reference to the accompanying drawings. These exemplary embodiments are used for illustration purposes only and are not to be construed as limiting. Elements or components of different exemplary embodiments can be combined with one another, unless otherwise indicated. Modifications and variations which are described for one of the exemplary embodiments can also be applied to other exemplary embodiments. To avoid repetition, elements that are the same or that correspond to one another are denoted by the same reference signs in different figures and are not explained more than once. The figures are schematic and the dimensions of elements shown are not to scale. The drawings show in:
- Fig. 1: schematically a first example of a laser processing head;
- Fig. 2: schematically a second example of a laser processing head;
- Fig. 3: schematically an exemplary holder for a protective glass;
- Fig. 4: schematically an exemplary holder for a protective glass;
- Fig. 5a: schematically an exemplary holder for a protective glass;
- Fig. 5b: schematically an exemplary holder for a protective glass; and
- Fig. 5c: schematically a cross sectional view of the exemplary holder for a protective glass shown in Fig. 5b.

The term "laser processing head" can also be called "processing head".

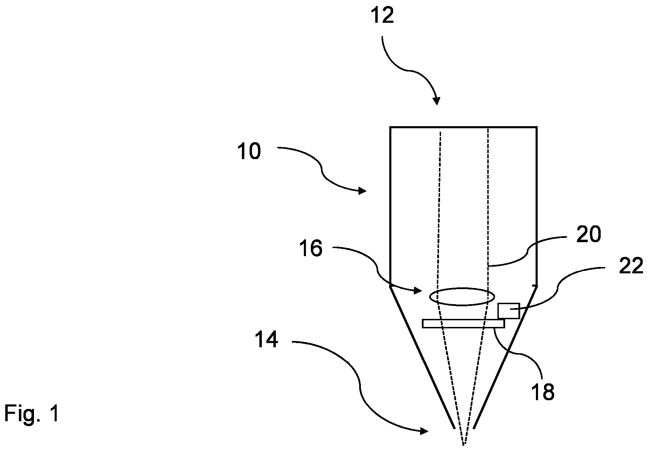

Fig. 1 schematically shows as a first example a laser processing head 10 for a laser processing machine (not shown). The laser processing head 10 has a laser light entry point 12 and a laser light exit point 14, and a laser guiding optics 16 in between the laser light entry point and the laser light exit point. A protective glass 18 which is transmissive at least to laser light 20, also called laser beam 20, is arranged at the end of the laser guiding optics 16 towards the laser light exit point 14. In this example, the protective glass 18 is formed of sapphire. The laser processing head has an electrical heating system 22 to heat the protective glass 18. In this example, the electrical heating system 22 is a heating element (not shown in Fig. 1) attached to the protective glass 18.

The electrical heating system 22 is configured to permanently heat the protective glass 18. In a modification of this example, the heating element of electrical heating system 22 is connected in a data conducting manner, wired or wireless, to a control system (not shown) of the laser processing head 10 and is controllable thereby. The control system can be configured for controlling the electrical heating system 22 to heat the protective glass 18 exclusively during processing breaks.

The guiding optics 16 includes in the first example a lens for focussing the laser light 16 through the laser light exit point 14. In other examples, the optics 16 can include other or further optical elements for guiding the laser light 16, such a deflection mirrors. The laser processing machine can be a laser cutting apparatus.

In another example (not shown), the electrical heating system 22 is an infrared heating element which is provided in the processing head separately and at a distance from the protective glass 18. The electrical heating system heats the protective glass 18 by an infrared field.

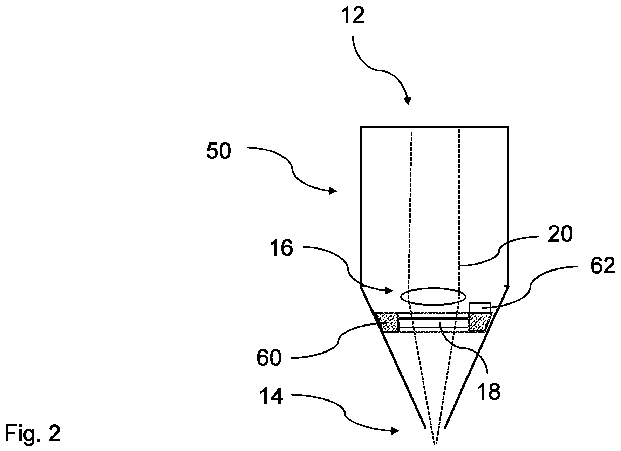

Fig. 2 schematically shows as a second example a laser processing head 50 for a laser processing machine. The laser processing head 50 differs from the laser processing head 10 by having a holder 60 for the protective glass 18. The heating element of heating system 62 is attached to the holder 60, which is thermally conductive, to indirectly heat the protective glass 18 via the holder 60.

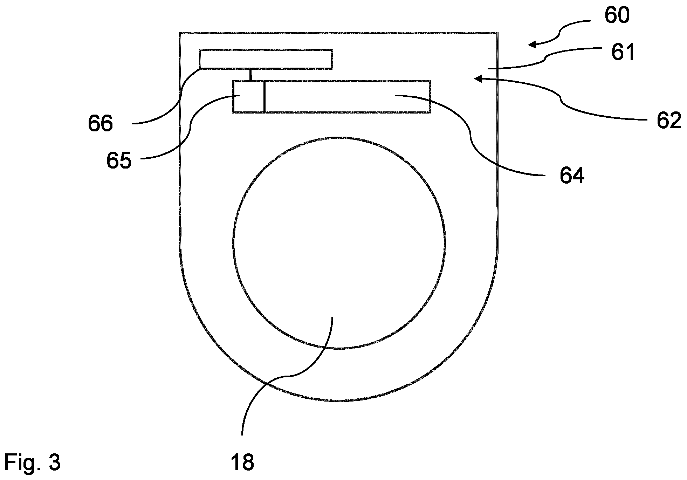

Fig. 3 schematically illustrates a top view on the holder 60 of the second example. The holder 60 has a frame structure 61 to mount and/or to support the protective glass 18. On the holder 60, in this example on its frame structure 61, the electrical heating system 62 is provided, which includes a heating element 64 and a temperature sensor 66. In operation of the heating system 62, when the sensor 66 determines a temperature of the protective glass 18 of less than 50°C, the heating system 62 heats the protective glass 18 to temperatures of at least 50°C. Thereby, adsorption of undesired gaseous substances, which are present within the processing head 50 or flow into the processing head 50, on the protective glass 18 can be prevented.

In the second example, the processing head 50 includes a control device 65 of the electrical heating system 62 which is connected in a data conducting manner, e.g. wireless, to the temperature sensor 66 and the heating element 64. The control device 65 can be connected to the control system of the laser processing head 50. The control system and/or the control device 65 are configured for controlling the electrical heating element 64 to heat the protective glass 18 exclusively during processing breaks and/or permanently. In other examples, the control device 65 is not provided, since the electrical heating element 64 is configured to heat the protective glass 18 permanently.

During processing of a workpiece, the laser beam 20 is decoupled from the environment outside the laser processing head 50 by protection glass 18 which is held by holder 60. The temperature of the protection glass 18 is measured by sensor 66 and the temperature of the heating element 64 is controlled by control device 65 and/and or the control system of the processing head, based on data received from the sensor 66. This leads e.g. to a constant temperature of the protection glass 18 above the desorption temperature of substances which may adsorb on the protection glass 18. Thereby, environmental influences, such as particles and gasses from the environment or arising from the processing, e.g. during cutting a workpiece, can be reduced and the generation of an undesired film on the protection glass can be avoided.

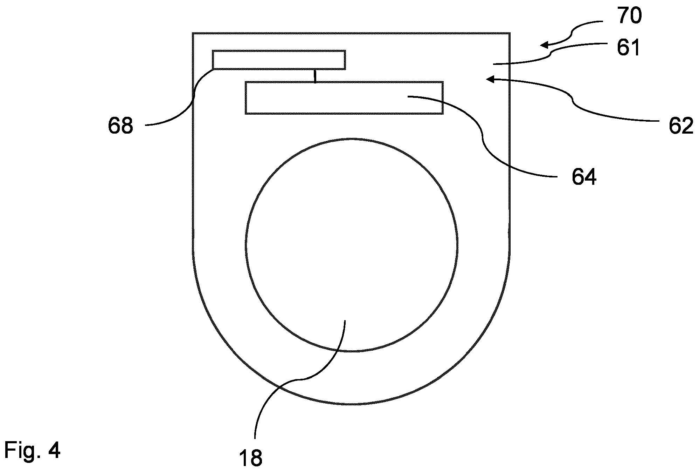

Fig. 4 schematically shows an exemplary holder 70 for the protective glass 18, in a top view. The holder 70 differs from holder 60 by including in its electrical heating system 62, instead of the heating element 64 and the temperature sensor 66, and a bimetal switch 68 electrically connected to the electrical heating element 64. In operation of the heating system 62, at a temperature of the protective glass 18 of less than 50°C, the bimetal switch 68 switches the heating element 64 to heat the protective glass 18 to temperatures of at least 50°C. A control device 65 is therefore not provided.

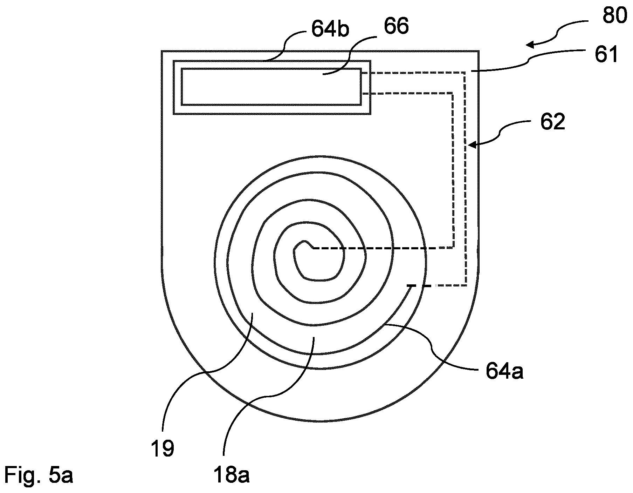

Fig. 5a schematically shows a top view on an exemplary holder 80 for an exemplary protective glass 18a. In this example, the protective glass 18a is provided with an electrical heating system 62, which has an electrical resistance heating element 64a attached to a surface 19 of the protective glass 18a by material bonding. In case that the protective glass 18 is to be provided at the end of laser guiding optics of a laser processing head, the surface 19 of the protective glass 18a can be arranged opposite the laser light exit point 14 of the laser processing head. In the present example, the electrical resistance heating element 64a is spiral shaped. In further examples, other shapes of the heating element 64a can be provided. The electrical heating system 62 includes the temperature sensor 66 and a heating power supply 64b for the heating element 64a. In operation, the protective glass 18a is heated directly by the electrical resistance heating element 64a.

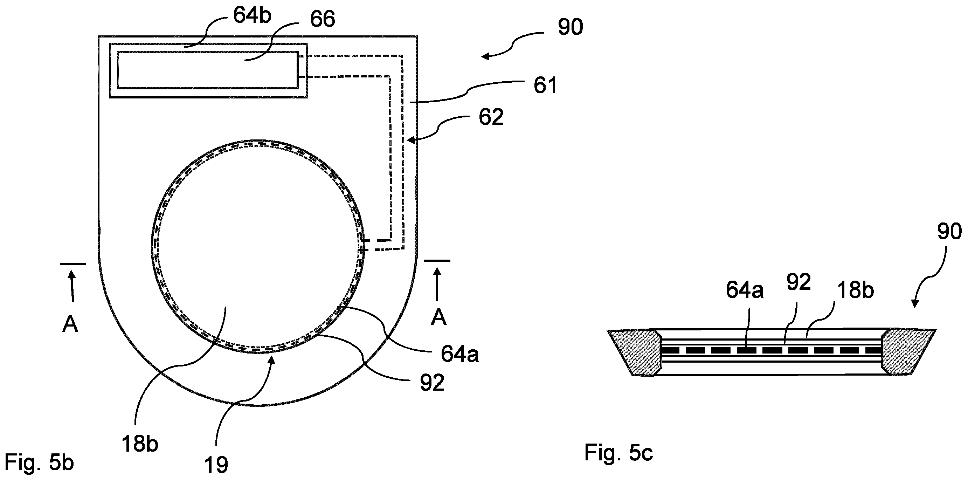

Figs. 5b and 5c schematically show another example of a holder 90 and a protective glass 18b. Fig. 5b is a top view on the holder 90. The protective glass 18b can be arranged at the end of the laser guiding optics of a laser processing head, having the surface 19 positioned opposite to the laser light exit point of the laser processing head. Fig. 5c is a view on a cross section through holder 90 along line A-A shown in Fig. 5b. In this example, in contrast to the example shown in Fig. 5a, the protective glass 18b includes a circumferential notch 92 in its surface 19, which is in this example circular. The notch 92 carries the electrical resistance heating element 64a which has in this example a circular shape. The electrical resistance heating element 64a can be attached in the notch 92 by material bonding or clamping. In further examples, other shapes of the heating element 64a and of the notch 92 can be provided.

### Reference signs

- 10: laser processing head
- 12: laser light entry point
- 14: laser light exit point
- 16: laser guiding optics
- 18: protective glass
- 18a: protective glass
- 18b: protective glass
- 19: surface of the protective glass
- 20: laser light
- 22: electrical heating system
- 50: laser processing head
- 60: holder for the protective glass
- 61: frame structure
- 62: electrical heating system
- 64: heating element
- 64a: electrical resistance heating element
- 64b: heating power supply
- 65: control device
- 66: sensor
- 68: bimetal switch
- 70: holder for the protective glass
- 80: holder for the protective glass
- 90: holder for the protective glass
- 92: notch
- A-A: line

## Claims

1. A laser processing head (10; 50) for a laser processing machine, comprising a laser light entry point (12) and a laser light exit point (14);
a laser guiding optics (16) in between the laser light entry point and the laser light exit point; and
a protective glass (18; 18a, 18b) being transmissive at least to laser light and being arranged at the end of the laser guiding optics towards the laser light exit point; **characterized in** having an electrical heating system (22, 62) to heat the protective glass.

2. The laser processing head according to claim 1;
wherein the electrical heating system (22; 62) is configured to heat the protective glass to at least 30° C, preferably to 30° to 80° C, more preferably to 40° to 70° C.

3. The laser processing head according to any of claims 1 or 2,
wherein the electrical heating system (22; 62) is selected from
- an electrical resistance heating system,
- an electrical inductive heating system, and
- an electrical powered Peltier system.

4. The laser processing head according to any of the preceding claims,
wherein the electrical heating system (22; 62) includes at least one heating element (64), preferably an electrical resistance heating element (64a), for heating the protective glass.

5. The laser processing head according to any of the preceding claims, comprising
at least one element selected from a holder (60; 70; 80; 90) for the protective glass (18; 18a, 18b) at the end of the laser guiding optics (16) and a recess for inserting the holder for the protective glass at the end of the laser guiding optics (16).

6. The laser processing head according to any of the preceding claims,
wherein the electrical heating system (22, 62) includes at least one temperature sensor (66) for detecting the temperature of the protective glass.

7. The laser processing head according to any of the preceding claims,
wherein the heating element (64) is integrated into or is attached to or is configured to be attached to the protective glass (18; 18a, 18b).

8. The laser processing head according to any of the preceding claims, wherein the heating element (64) is arranged separate from the protective glass and/or at the holder (60; 70) for the protective glass.

9. The laser processing head according to any of the preceding claims,
comprising a control system (65) configured for controlling the electrical heating system (62) to heat the protective glass exclusively during processing breaks and/or permanently.

10. A holder (60; 70; 80; 90) for a protective glass (18; 18a, 18b) to be inserted in the laser processing head according to any of claims 1 to 9;
the holder having a frame structure (61) to mount and/or to support the protective glass (18; 18a, 18b) and including at least one element of the electrical heating system (22) selected from the heating element (64; 64a), the temperature sensor (66), and a bimetal switch (68).

11. A protective glass (18; 18a, 18b) for a laser processing head (10; 50) of a laser processing machine, in particular for a laser processing head according to any of claims 1 to 9, having a heating element (64), preferably an electrical resistance heating element (64a), of an electrical heating system (62), integrated into the protective glass or attached to one of its surfaces (19).

12. A protective glass according to claim 11, **characterized in that** the protective glass (18; 18a, 18b) has a circumferential notch (92) that carries the electrical resistance heating element.

13. A method for laser processing a workpiece with a laser processing head (10; 50) according to any of claims 1 to 9,
wherein the protective glass (18; 18a, 18b) is heated by an electrical heating system (22; 62) to at least 30° C, preferably to 30° to 80° C, more preferably to 40° to 70° C.

## Amended claims

### Amended claims in accordance with Rule 137(2) EPC.

1. A laser processing head (10; 50) for a laser processing machine, comprising a laser light entry point (12) and a laser light exit point (14);
a laser guiding optics (16) in between the laser light entry point and the laser light exit point; a protective glass (18; 18a, 18b) being transmissive at least to laser light and being arranged at the end of the laser guiding optics towards the laser light exit point; and
an electrical heating system (22, 62) to heat the protective glass;
wherein the protective glass has a heating element (64), preferably an electrical resistance heating element (64a), of the electrical heating system (62), integrated into the protective glass or attached to one of its surfaces (19);
**characterized in that** the protective glass (18; 18a, 18b) has a circumferential notch (92) that carries the heating element, in particular the electrical resistance heating element.

2. The laser processing head according to claim 1;
wherein the electrical heating system (22; 62) is configured to heat the protective glass to at least 30° C, preferably to 30° to 80° C, more preferably to 40° to 70° C.

3. The laser processing head according to any of claims 1 or 2,
wherein the electrical heating system (22; 62) is selected from
- an electrical resistance heating system,
- an electrical inductive heating system, and
- an electrical powered Peltier system.

4. The laser processing head according to any of the preceding claims,
wherein the electrical heating system (22; 62) includes at least one heating element (64), preferably an electrical resistance heating element (64a), for heating the protective glass.

5. The laser processing head according to any of the preceding claims, comprising at least one element selected from a holder (60; 70; 80; 90) for the protective glass (18; 18a, 18b) at the end of the laser guiding optics (16) and a recess for inserting the holder for the protective glass at the end of the laser guiding optics (16).

6. The laser processing head according to any of the preceding claims,
wherein the electrical heating system (22, 62) includes at least one temperature sensor (66) for detecting the temperature of the protective glass.

7. The laser processing head according to any of the preceding claims, wherein the heating element (64) is arranged separate from the protective glass and/or at the holder (60; 70) for the protective glass.

8. The laser processing head according to any of the preceding claims,
comprising a control system (65) configured for controlling the electrical heating system (62) to heat the protective glass exclusively during processing breaks and/or permanently.

9. A holder (60; 70; 80; 90) for a protective glass (18; 18a, 18b) to be inserted in the laser processing head according to any of claims 1 to 9;
the holder having a frame structure (61) to mount and/or to support the protective glass (18; 18a, 18b) and including at least one element of the electrical heating system (22) selected from the temperature sensor (66), and a bimetal switch (68).

10. A protective glass (18; 18a, 18b) for a laser processing head (10; 50) of a laser processing machine, in particular for a laser processing head according to any of claims 1 to 8, having a heating element (64), preferably an electrical resistance heating element (64a), of an electrical heating system (62), integrated into the protective glass or attached to one of its surfaces (19); **characterized in that** the protective glass (18; 18a, 18b) has a circumferential notch (92) that carries the heating element, in particular the electrical resistance heating element.

11. A method for laser processing a workpiece with a laser processing head (10; 50) according to any of claims 1 to 8,
wherein the protective glass (18; 18a, 18b) is heated by an electrical heating system (22; 62) to at least 30° C, preferably to 30° to 80° C, more preferably to 40° to 70° C.
